Europäisches Patentamt

(19) European Patent Office

Office européen des brevets

(11) Publication number: **0 048 511**

**A1**

(12) **EUROPEAN PATENT APPLICATION**

(21) Application number: **81200995.9**

(22) Date of filing: **08.09.81**

(51) Int. Cl.³: **G 01 B 7/00**

(30) Priority: **23.09.80 IT 2485880**

(43) Date of publication of application:
**31.03.82 Bulletin 82/13**

(84) Designated Contracting States:
**AT BE CH DE FR GB LI LU NL SE**

(71) Applicant: **CISE- Centro Informazioni Studi Esperienze S.p.A.**
**Via Carducci, 14**
**I-20123 Milano(IT)**

(72) Inventor: **Angelino-Pievani, Giancarlo**
**Via Simone Martini, 9**
**I - 20096 Pioltello (Milano)(IT)**

(74) Representative: **Martegani, Franco et al,**
**Ing. Barzanò & Zanardo S.p.A. Via Borgonuovo, 10**
**I-20121 Milano(IT)**

(54) **High-precision electric transducer for measuring displacements on bodies endowed with an unlimited relative motion.**

(57) This invention relates to an electric transducer of high precision for measuring displacements of a body to which a ferromagnetic core (15) is secured, the core being movable in a channel shaped space (14) provided between the pole shoes of C-shaped fixed cores (12,13) carrying the primary (10) and the secondary (11) windings.

Fig.1

Fig.2

EP 0 048 511 A1

1.

## HIGH-PRECISION ELECTRIC TRANSDUCER FOR MEASURING DISPLACEMENTS ON BODIES ENDOWED WITH AN UNLIMITED RELATIVE MOTION.-

This invention relates to an electric displacement-transducer of the induction type, that is, one based on the variation of the inductance of a given solenoid as caused by a relative displacement between the winding and the core, which are secured, respectively, to the two bodies in movement.

Transducers of the kind referred to above enable the variable relative positions of stationary bodies, as well as the relative positions, at a preselected instant of time of bodies having a relative motion with respect to one another, to be measured with a great accuracy (1 $\mu$m approx.).

Induction transducer as known in the art have such constructional arrangements that they are allowed but a restricted relative displacement, in a direction, of said two bodies. As a matter of fact, such transducer provide for the core to enter centrally a cylindrical coil, so that the coil cannot be overtaken by the body on which the core is installed.

It is thus apparent that the relative displacement between the two bodies is restricted by the position in which the core is completely introduced into the coil.

An object of the present invention is to do away with such a limitation by providing an induction transducer so constructed that it may afford the same accuracy characteristics as the conventional transducers, while concurrently making possible the unrestricted relative motion of the two bodies relative to one another.

Having these objects in view, according to the invention, it has been envisaged to provide a variable-inductance electric transducer which is characterized in that it comprises, in combination, at least two C-shaped cores placed in axial alignment so as to confine between their pole shoes an open channel-shaped space, a primary and a secondary winding being coiled on each of said cores, the secondary winding on a core being wound in a sense contrary to the sense of winding on the other core, and a ferromagnetic member adapted to be received in the channel-shaped space, said windings and said core being respectively secured to the bodies endowed with the relative movement.

The structural and functional features of the invention and its advantages over the conventional art will become more clearly apparent from the scrutiny of the ensuing exemplary description with reference to the accompanying diagrammatical drawings, wherein :

FIGURE 1 is a side elevational view showing a transducer constructed according to the principles of this invention.

FIGURE 2 is a front elevational view of the transducer shown in FIG.1, and

FIGURE 3 is a cross-sectional view taken along the line III-III of FIG.1.

Having now reference to the drawings, an induction transducer embodied according to this invention can be structurally composed of a couple of primary windings, 10, and a couple of secondary windings, 11, which are wound, in the contrary directions indicated by the arrows, on respective ferrite bodies, 12, 13, which are in the shape of a "C".

The pole shoes of the cores 12 and 13, inasmuch as the cores are aligned, confine a channel-shaped space 14, which is open at its ends and which freely receives a plate-shaped movable ferrite core 15.

The windings 10,11 with their cores 12 and 13 may be secured, for example, to a fixed body 16, whereas the core 15 can be fastened to a movable body 17.

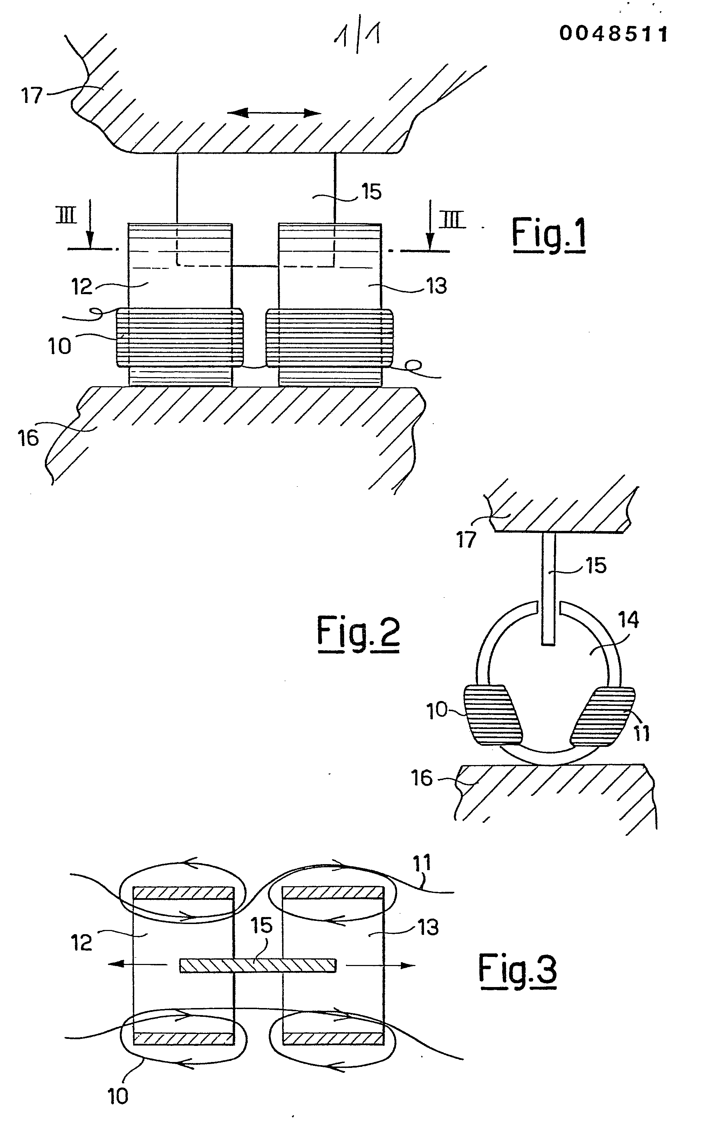

By feeding the primary windings of the transducer with an alternating voltage, $V_m$ having an appropriate frequency, there will appear at the secondary windings an output voltage, $V_{out} = 0$ when the movable core 15 is symmetrically positioned relative to the magnetic circuit, that is in the position of FIG.1, according to what is generally known in the technology of such variable inductance transducers.

By moving the core towards the left,or towards the right, relative to the aforesaid position, there will be induced in the secondary windings alternating voltages which are proportional, within the linear field, to the magnitude of the applied displacement. By exploiting any of the conventional phase-detecting and rectifying circuitries it becomes possible to recognize the direction of the displacement and to double the linearity field of the transducer.

The transducer according to the invention can be used in all those cases in which a great accuracy is required on particular points of a large path : it must be mentioned that the transducer does not give rise to any mechanical contact between the parts concerned and that it can be easily encapsulated to withstand particular environmental conditions (water, oil, steam and otherwise). Such a transducer can be employed, for example, in the instrumental assemblies for measuring the bending of a sample in an instrumental Charpy test. The fixed portion of the transducer is rigidly secured to the frame which supports the pendulum, whereas the movable portion is secured to the swinging mass.

The transducer makes it possible to determine the trend of

4.

bending during progress of the testing of the sample : this measurement, coupled with the usual measurement of the applied force, permits to obtain the direct value of a few parameters of the mechanics of fracture, which otherwise could be determined only at the expense of intricate calculations and, in some case could not be determined at all absolutely.

Another exemplary application is in the instrumental assembly for measuring the bending of a sample in the tests with the drop weight testing machines (DWT). What has been set forth hereinbefore applies alto to DWT and in such a case, the oscillating mass of the pendulum is replaced by a mass which is allowed to fall freely.

These applications, however, do not limit in any wise the scope of the invention, as defined by the appended claims.

More particularly, the shapes of the individual component parts : for example, the outline of the cores 12 and 13, exemplified herein as circular, can be different inasmuch as it is merely necessary that the core have two confrontingly positioned shoes between which the movable core may be allowed freely to pass so that, by varying the gap, the mutual inductance between the primary and the secondary windings is consequently varied.

1.

CLAIM :

1.    A variable-inductance electric transducer characterized in that it comprises, in combination, at least two C-shaped cores in axial alignment relative to one another so as to confine an open channel-shaped space therebetween, a primary winding and a secondary winding being coiled on each of said cores, the secondary winding on a core having a coiling sense opposite to that of the secondary winding on the other core, and a ferromagnetic member adapted to be received in said channel-shaped space, said windings and said core being respectively secured to the bodies in relative movement with respect to one another.

1/1

0048511

**Fig.1**

**Fig.2**

**Fig.3**

0048511

Application number

**European Patent Office**

**EUROPEAN SEARCH REPORT**

EP 81 20 0995.9

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | Patents Abstracts of Japan Vol. 1, No. 58, 6 June 1977 page 144E77 & JP - A - 52 - 2549 --- | | G 01 B 7/00 |
| A | Soviet Inventions Illustrated Week B 25, 1 August 1979 Section R11 & SU - A - 620804 --- | | |
| A | Soviet Inventions Illustrated Week C 02, 20 February 1980 Section R11 & SU - A - 589538 ----- | | |

TECHNICAL FIELDS SEARCHED (Int. Cl.³)

G 01 B 7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 11-12-1981 | KÖHN |

EPO Form 1503.1 06.78